# EUROPEAN PATENT SPECIFICATION

(11) **EP 2 818 385 B1**
(45) Date of publication and mention of the grant of the patent: **05.10.2016**
(21) Application number: 14173517.5
(22) Date of filing: 23.06.2014
(51) Int. Cl.: B62D 1/19

(54) **Steering system**
Lenksystem
Système de direction

(30) Priority: 28.06.2013 JP 2013136932
(43) Date of publication of application: 31.12.2014
(73) Proprietor: JTEKT Corporation, Osaka-shi Osaka 542-8502 (JP)
(72) Inventor: Morita, Shigeru, Osaka-shi,, Osaka 542-8502 (JP); Aoki, Tomoaki, Osaka-shi,, Osaka 542-8502 (JP)
(74) Representative: Winter, Brandl, Fürniss, Hübner, Röss, Kaiser, Polte - Partnerschaft mbB

(56) References cited:
- EP-A2- 1 908 663
- EP-A2- 2 366 602
- JP-A- H08 295 251
- JP-A- 2005 053 349

## Description

### BACKGROUND OF THE INVENTION

### 1. Field of the Invention

The invention relates to a steering system.

### 2. Description of the Related Art

A conventional impact absorption-type steering column apparatus described in Japanese Patent Application Publication No. 2005-53349 (JP 2005-53349 A) includes a breakaway bracket that supports a bracket fixed to an outer tube. The breakaway bracket is attached to a vehicle body-side bracket with bolts. The breakaway bracket is provided with an energy absorption plate. The energy absorption plate has: an U-shaped stationary portion that is attached to the breakaway bracket so as to be movable relative to the breakaway bracket; and a T-shaped engaging portion that is allowed to be engaged with or disengaged from an engagement recessed portion formed in the vehicle body-side bracket. A prescribed idle-moving distance is defined between the T-shaped engaging portion and the engagement recessed portion.

When the breakaway bracket is moved relative to the vehicle body-side bracket and thus detached from the vehicle body-side bracket due to a secondary collision, the T-shaped engaging portion is engaged with the engagement recessed portion as the breakaway bracket is moved forward. Then, a lower linear portion of the U-shaped stationary portion deforms by being sequentially squeezed along a guide attached to the breakaway bracket. An impact at the time of a secondary collision is absorbed by the deformation of the energy absorption plate (EA: Energy Absorption).

In the impact absorption-type steering column apparatus described in JP 2005-53349 A, the T-shaped engaging portion is formed in the energy absorption plate that is a component of the steering column apparatus. On the other hand, the engagement recessed portion is formed in the vehicle body-side bracket that is a component on the vehicle body side. The portions that determine the idle-moving distance that exerts the influence on the amount of energy that can be absorbed at the time of a secondary collision are provided respectively on the steering column apparatus side and the vehicle body side. In this case, the idle-moving distance may vary due to the variations in the assembly accuracy that are generated when the steering column apparatus is assembled to the vehicle body, in addition to the variations in the dimensional accuracy of the components. Such an increase in the variations in the idle-moving distance makes it difficult to control the energy absorption amount at the time of a secondary collision.

A steering system having the features of the preamble of claim 1 is known from EP 1 908 663 A2.

### SUMMARY OF THE INVENTION

One object of the invention is to provide a steering system in which variations in an idle-moving distance are reduced.

A steering system according to an aspect of the invention includes: a bracket that holds a steering shaft to which a steering member is connected, and that is movable toward a downstream side in a prescribed moving direction together with the steering member at the time of a secondary collision; an engaging portion formed so as to be movable together with the bracket; a fixing portion of which a position relative to a vehicle body is fixed, the position of the fixing portion relative to the vehicle body after the secondary collision being the same as that before the secondary collision; and an absorbing member with a cantilever structure, the absorbing member having a fixed portion fixed to the fixing portion, an engaged portion located on the downstream side in the moving direction with respect to the engaging portion, a connecting portion that connects the fixed portion and the engaged portion to each other, and an idle-moving portion formed in the connecting portion. At the time of the secondary collision, the absorbing member absorbs energy of the secondary collision by deforming the connecting portion after engagement between the engaging portion and the engaged portion. The idle-moving portion is a part of the connecting portion located between the engaged portion and the engaging portion before the secondary collision. The idle-moving portion has a prescribed length, and the length of the idle-moving portion is equal to an idle-moving distance over which the engaging portion moves until the engaging portion is engaged with the engaged portion at the time of the secondary collision.

In the steering system according to the above aspect, at the time of the secondary collision, the absorbing member absorbs energy of the secondary collision by deforming the connecting portion after engagement between the engaging portion and the engaged portion. The idle-moving portion has a prescribed length, and the length of the idle-moving portion is equal to an idle-moving distance over which the engaging portion moves until the engaging portion is engaged with the engaged portion at the time of the secondary collision. Thus, the amount of energy absorbed by the absorbing member is set to a desired value by adjusting the idle-moving distance.

The absorbing member is fixed to the fixing portion included in the steering system. The bracket having the engaging portion is a part of the steering system. Thus, the idle-moving distance, which is the distance between the engaged portion of the absorbing member and the engaging portion before a secondary collision, is determined only by the components of the steering system. Thus, variations of the position at which the steering system is assembled to the vehicle body do not cause variations of the idle-moving distance. Thus, in the steering system, variations in the idle-moving distance are reduced.

In the steering system according to the above aspect, the fixing portion may include a capsule that positions the bracket with respect to the vehicle body before the secondary collision, and that allows the bracket to move toward the downstream side in the moving direction at the time of the secondary collision.

In the steering system according to the above aspect, the number of the absorbing member may be one. If the number of the absorbing member is one, the number of components is reduced.

In the steering system according to the above aspect, a pair of the absorbing members may be provided so that the steering shaft is interposed between the absorbing members. With this configuration, the energy of the secondary collision is stably absorbed because the absorbing members are respectively provided on the opposite sides of the steering shaft.

In the steering system according to the above aspect, the connecting portion may have a wave-shape. With this structure, in the normal state before the secondary collision, the size of the connecting portion is small, whereas at the time of the secondary collision, the connecting portion is deformed by a large amount. Thus, the absorbing member is capable of absorbing the secondary collision energy effectively.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic side view of a steering system according to an embodiment of the invention;
FIG. 2 is a sectional view illustrating the steering system taken along a plane extending along the right-left direction and the up-down direction;
FIG. 3 is an enlarged view of main portions in FIG. 1;
FIG. 4 is a view illustrating the state achieved at the moment when an engaging portion and an engaged portion, which are illustrated in FIG. 3, are engaged with each other due to a secondary collision;
FIG. 5 is a view illustrating the state achieved after a connecting portion illustrated in FIG. 3 is deformed due to the secondary collision; and
FIG. 6 is a view illustrating another embodiment of the invention applied to FIG. 3.

### DETAILED DESCRIPTION OF EMBODIMENTS

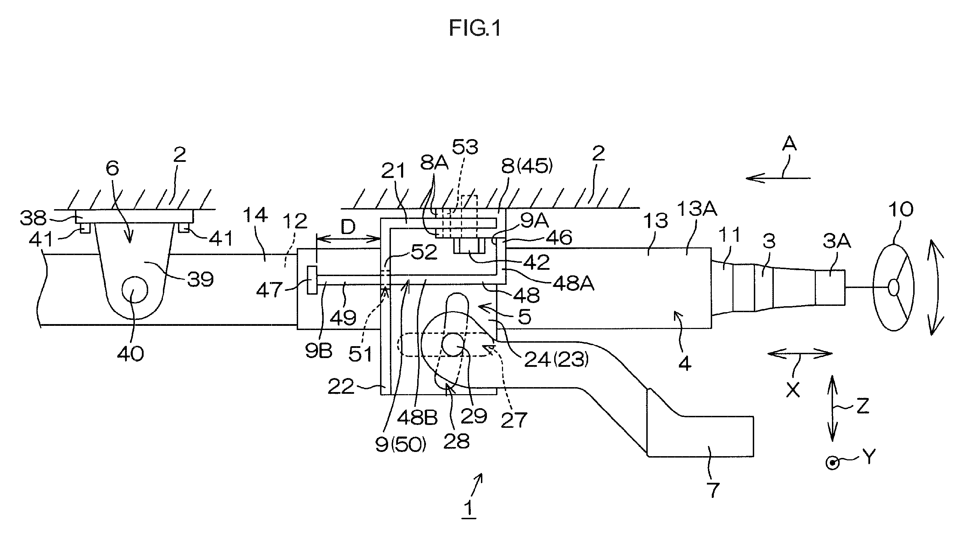

Hereinafter, embodiments of the invention will be described in detail with reference to the accompanying drawings. FIG. 1 is a schematic side view schematically illustrating a steering system 1 according to an embodiment of the invention. In FIG. 1, the left side of a sheet on which FIG. 1 is drawn corresponds to the front side of a vehicle body 2, the right side of the sheet corresponds to the rear side of the vehicle body 2, the upper side of the sheet corresponds to the upper side of the vehicle body 2, and the lower side of the sheet corresponds to the lower side of the vehicle body 2. The steering system 1 includes, as main components, a steering shaft 3, a steering column 4, an upper bracket 5, a lower bracket 6, and a lever 7. The steering system 1 is attached to the vehicle body 2 with the upper bracket 5 and the lower bracket 6. One end (rear end 3A) of the steering shaft 3 is connected to a steering member 10 such as a steering wheel. In the steering system 1, it is possible to make a telescopic adjustment (extension-contraction adjustment of the steering column 4) and a tilt adjustment (tilt adjustment of the steering column 4) by turning the lever 7 (details of these adjustments will be described later).

The steering shaft 3 has a generally cylindrical shape or a generally columnar shape as a whole. The steering shaft 3 includes an upper shaft 11 and a lower shaft 12 that are disposed coaxially. The upper shaft 11 is located closer to the steering member 10 (the rear side of the vehicle body) than the lower shaft 12 and is movable relative to the lower shaft 12 in the axial direction of the steering shaft 3. Hereinafter, the extending direction of the steering shaft 3 is defined as an axial direction X. The axial direction X coincides with the right-left direction in FIG. 1. Directions perpendicular to the axial direction X are defined as a right-left direction Y and an up-down direction Z. The right-left direction Y corresponds to a direction perpendicular to the sheet on which FIG. 1 is drawn and the up-down direction Z corresponds to an up-down direction in FIG. 1.

The steering column 4 has a generally cylindrical shape as a whole and accommodates the steering shaft 3. The steering column 4 includes an upper column 13 and a lower column 14 that are disposed coaxially. The upper column 13 is located closer to the steering member 10 (the rear side of the vehicle body) than the lower column 14 and is movable along the axial direction X relative to the lower column 14. The upper column 13 and the upper shaft 11 are connected to each other via, for example, a bearing (not illustrated). The lower column 14 and the lower shaft 12 are connected to each other via, for example, a bearing (not illustrated). Thus, the upper column 13 and the upper shaft 11 are movable together with each other in the axial direction X relative to the lower column 14 and the lower shaft 12. Thus, the steering column 4 and the steering shaft 3 are extended or contracted together with each other.

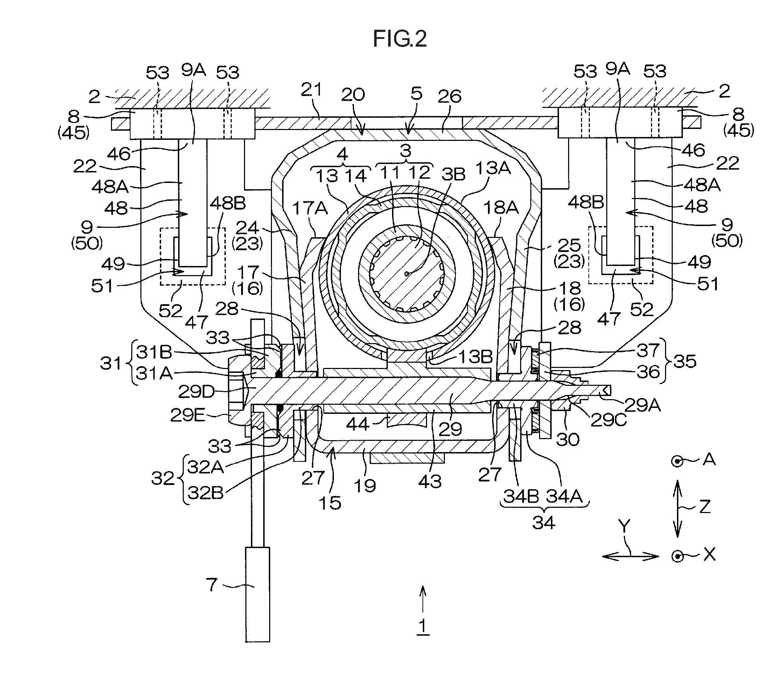

FIG. 2 is a sectional view of the steering system 1, taken along a plane including the right-left direction Y and the up-down direction Z in FIG. 1. The direction perpendicular to a sheet on which FIG. 2 is drawn coincides with the axial direction X in FIG. 1. The up-down direction Z in FIG. 2 coincides with the up-down direction Z in FIG. 1. The right-left direction Y in FIG. 2 coincides with the right-left direction Y in FIG. 1. The side closer to a person who sees FIG. 2 in the direction perpendicular to the sheet on which FIG. 2 is drawn coincides with the steering member 10 side (the rear side of the vehicle body 2) in FIG. 1.

Hereinafter, description will be provided with reference to FIG. 2 in addition to FIG. 1. The upper bracket 5 supports the upper column 13 of the steering column 4, thereby connecting the steering system 1 to the vehicle body 2. As described above, the upper shaft 11 of the steering shaft 3 is connected to the upper column 13 via the bearing (not illustrated), and thus the upper bracket 5 holds the steering shaft 3 indirectly. The upper bracket 5 includes an upper column bracket 15, an upper fixing bracket 20, an attachment stay 21, and a pair of first side plates 22.

The upper column bracket 15 supports the upper column 13 of the steering column 4, thereby connecting the steering system 1 to the vehicle body 2. The upper column bracket 15 is a groove-like member that opens upward (i.e., that has a generally U-shape as viewed from the axial direction X) and is symmetrical with respect to a plane that extends, through a central axis 3B of the steering shaft 3, in the up-down direction Z. More specifically, the upper column bracket 15 has a pair of side plates 16 (a left side plate 17 and a right side plate 18) that are opposed to each other, and a connecting plate 19 that connects lower end portions of the left side plate 17 and the right side plate 18 to each other. An upper end portion 17A of the left side plate 17 and an upper end portion 18A of the right side plate 18 are connected, by welding or the like, to an outer periphery 13A of the upper column 13.

The upper fixing bracket 20 is a groove-like member that opens downward (i.e., that has a generally inverted U-shape as viewed from the axial direction X) and is symmetrical with respect to a plane that extends, through the central axis 3B, in the up-down direction Z. More specifically, the upper fixing bracket 20 has a pair of second side plates 23 (a left side plate 24 and a right side plate 25) that are opposed to each other, and a connecting plate 26 that connects upper end portions of the left side plate 24 and the right side plate 25 to each other. As illustrated in FIG. 2, the steering shaft 3, the steering column 4, and the upper column bracket 15 are disposed between the left side plate 24 and the right side plate 25 of the upper fixing bracket 20.

The right side face of the right side plate 18 of the upper column bracket 15 is placed on and extended along the left side face of the right side plate 25 of the upper fixing bracket 20. The left side face of the left side plate 17 of the upper column bracket 15 is placed on and extended along the right side face of the left side plate 24 of the upper fixing bracket 20. Each of the right side plate 18 and the left side plate 17 of the upper column bracket 15 has a laterally elongated slot 27 for telescopic adjustment, which extends in the axial direction X and which is located at a position below the upper column 13. Each of the right side plate 25 and the left side plate 24 of the upper bracket 5 has a vertically elongated slot 28 for tilt adjustment.

The attachment stay 21 is fixed to the upper face of the connecting plate 26 and is in the form of a plate that extends generally along the right-left direction Y. The attachment stay 21 may be regarded as part of the upper fixing bracket 20. The first side plates 22 are in the form of plates that extend in both the up-down direction Z and the right-left direction Y, and are thin in the axial direction X. The first side plates 22 are integrated with the attachment stay 21 and the upper fixing bracket 20, and are symmetrical with respect to the steering shaft 3. The first side plates 22 extend downward from respective ends of the attachment stay 21 in the right-left direction Y, and are respectively located on the right and left sides of the upper fixing bracket 20.

As illustrated in FIG. 1, the lower bracket 6 supports the lower column 14 of the steering column 4, thereby connecting the steering system 1 to the vehicle body 2. The lower bracket 6 includes a top plate 38, a pair of side plates 39, and a tilt center shaft 40. The top plate 38 has a rectangular flat plate shape which is long in the right-left direction Y as viewed from the up-down direction Z. The top plate 38 is attached to the vehicle body 2 with bolts 41.

The side plates 39 extend downward from the top plate 38. The side plates 39 are disposed to face each other in the right-left direction Y and hold the steering shaft 3 from both sides in the right-left direction Y. The tilt center shaft 40 extends in the right-left direction Y, and is coupled to the lower column 14. The lower bracket 6 supports the lower column 14 via the tilt center shaft 40. Thus, the entirety of the steering column 4 including the lower column 14 is turnable about the tilt center shaft 40.

As illustrated in FIG. 2, in the steering system 1, a rotary shaft 29 is disposed at such a position that the rotary shaft 29 passes through the upper column bracket 15 and the upper fixing bracket 20 in the right-left direction Y. The rotary shaft 29 is a columnar body that extends in a direction that crosses the axial direction X of the steering shaft 3 (i.e., the right-left direction Y). The outer periphery of a right end portion 29A of the rotary shaft 29 has a screw groove 29C. A left end portion 29D of the rotary shaft 29 has a head portion 29E having a diameter larger than that of a main portion of the rotary shaft 29.

The rotary shaft 29 is passed through the laterally elongated slots 27 of the left side plate 17 and the right side plate 18 of the upper column bracket 15. The rotary shaft 29 is also passed through the vertically elongated slots 28 of the left side plate 24 and the right side plate 25 of the upper bracket 5. The rotary shaft 29 is disposed at a position apart from and below the upper column 13.

A nut 30 that is screwed into the screw groove 29C is disposed on the right end portion 29A of the rotary shaft 29. On the left end portion 29D of the rotary shaft 29, an annular cam 31 and an annular cam follower 32 are disposed between the head portion 29E and the left side plate 24 of the upper fixing bracket 20. The cam 31 has a first portion 31A that is brought into contact with the head portion 29E of the rotary shaft 29 from the right side and a second portion 31B that is located on the right side of the first portion 31A and that is larger in diameter than the first portion 31A. The lever 7 is attached to the rotary shaft 29. More specifically, the lever 7 surrounds the outer periphery of the first portion 31A and is fixed while being in contact with the right side face of the right head portion 29E and the left side face of the second portion 31B. Thus, in response to an operation of the lever 7, the lever 7 rotates the rotary shaft 29 and the cam 31 about the axis of the rotary shaft 29.

The cam follower 32 has a first portion 32A and a second portion 32B. The first portion 32A is in contact with the left side face of the left side plate 24 of the upper fixing bracket 20. The second portion 32B is fitted in the vertically elongated slot 28 of the left side plate 24 and the laterally elongated slot 27 of the left side plate 17 of the upper column bracket 15, and is movable along the extending directions of the laterally elongated slot 27 and vertically elongated slot 28. By forming a width across flat at a portion of the second portion 32B, which is fitted in the vertically elongated slot 28 of the left side plate 24, the rotation of the cam follower 32 is restricted by the vertically elongated slot 28.

Cam projections 33 are formed on the contact faces of the cam 31 and the cam follower 32. Thus, relative rotation between the cam 31 and the cam follower 32 causes the cam projection 33 of the cam 31 and the cam projections 33 of the cam follower 32 to run upon each other. Thus, the cam 31 moves the cam follower 32 in the axial direction of the rotary shaft 29 (rightward in the right-left direction Y), thereby pressing the cam follower 32 against the left side plate 24 of the upper bracket 5.

A first intervening member 34 and a second intervening member 35 are interposed between the nut 30 screwed to the right end portion 29A of the rotary shaft 29 and the right side plate 25 of the upper fixing bracket 20. The first intervening member 34 has a first portion 34A and a second portion 34B. The first portion 34A is in contact with the right side face of the right side plate 25. The second portion 34B is fitted in the vertically elongated slot 28 of the right side plate 25 and the laterally elongated slot 27 of the right side plate 18 of the upper column bracket 15, and is movable along the extending directions of the laterally elongated slot 27 and vertically elongated slot 28. By forming a width across flat at a portion of the second portion 34B, which is fitted in the vertically elongated slot 28 of the right side plate 25, the rotation of the first intervening member 34 is restricted by the vertically elongated slot 28.

The second intervening member 35 includes a thrust washer 36 that is interposed between the first portion 34A of the first intervening member 34 and the nut 30 and a thrust needle roller bearing 37 that is interposed between the thrust washer 36 and the first portion 34A of the first intervening member 34. Due to an operation of the second intervening member 35 that includes the needle roller bearing 37, the nut 30 is allowed, together with the rotary shaft 29, to rotate smoothly.

In response to an operation of the lever 7, the cam 31 rotates relative to the cam follower 32, and thus the cam follower 32 is moved in the axial direction of the rotary shaft 29 (rightward in the right-left direction Y). The second side plates 23 of the upper fixing bracket 20 are held and fastened between the moved cam follower 32 and the first intervening member 34, and thus each of the second side plates 23 is pressed against a corresponding one of the side plates 16 of the upper column bracket 15. Thus, the steering column 4 is brought into a state in which the steering column 4 is fixed in the axial direction X and the up-down direction Z (hereinafter, referred to as "fixed state"), and a tilt-lock that is the function of fixing the tilt mechanism and a telescopic lock that is the function of fixing the telescopic mechanism are achieved.

A tubular pushing member 43 is fitted on the rotary shaft 29. The pushing member 43 is disposed between the side plates 16 in the right-left direction Y. An eccentric cam 44 that projects in the radial direction of the rotary shaft 29 is fitted on a center portion of the pushing member 43 in the right-left direction Y. The pushing member 43 rotates together with the rotary shaft 29. When the steering column 4 is brought into the fixed state, the eccentric cam 44 enters a through-hole 13B that is formed in the upper column 13 and pushes the lower column 14 against the upper column 13. As the lower column 14 is pushed against the upper column 13, a backlash between the lower column 14 and the upper column 13 is eliminated.

Next, from this state, the lever 7 is rotated in a direction opposite to the direction in which the lever 7 is rotated previously. Then, the rotation of the lever 7 causes the cam 31 to rotate relative to the cam follower 32. Thus, the cam follower 32 moves in the axial direction of the rotary shaft 29 (leftward in the right-left direction Y). Then, between the cam follower 32 and the first intervening member 34, the second side plates 23 of the upper fixing bracket 20 are released from the fastened state. Consequently, each of the second side plates 23 that has been pressed against a corresponding one of the side plates 16 is released from the press-contact state. Thus, the steering column 4 is brought into the state where the steering column 4 is movable in the axial direction X and the up-down direction Z (hereinafter, referred to as "released state"), and thus it becomes possible to make the tilt adjustment and the telescopic adjustment. More specifically, as the rotary shaft 29 moves along the laterally elongated slots 27, the telescopic adjustment is made, whereas as the rotary shaft 29 moves along the vertically elongated slots 28, the tilt adjustment due to turning of the steering column 4 about the tilt center shaft 40 is made. In the released state, the eccentric cam 44 moves out of the through-hole 13B to be retracted to the outside of the steering column 4, and thus pushing of the lower column 14 against the upper column 13 is cancelled.

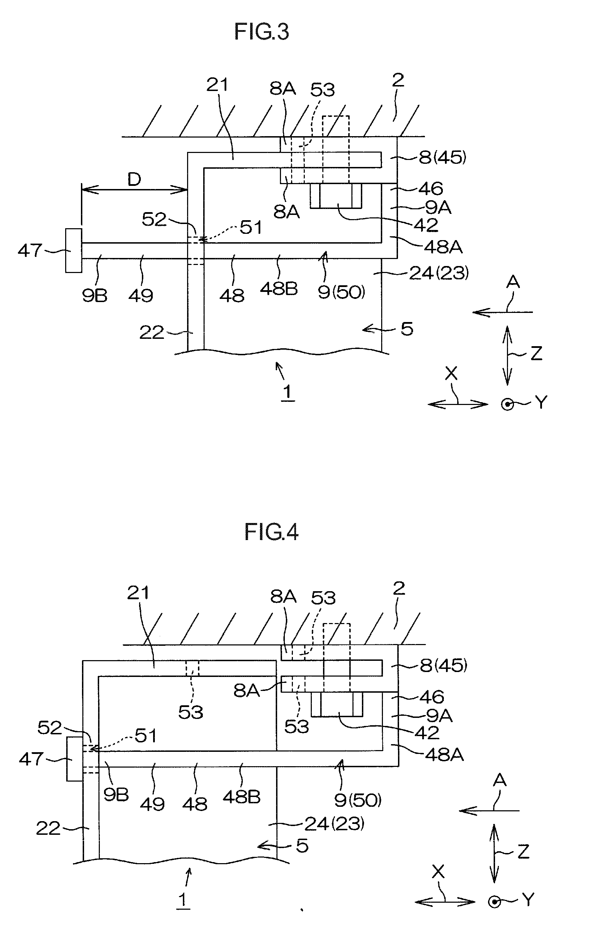

FIG. 3 is an enlarged view of main portions in FIG. 1. The posture of each member in FIG. 3 is the same as that in FIG. 1. Hereinafter, description will be provided with reference to FIG. 3 in addition to FIG. 1 and FIG. 2. The steering system 1 includes a pair of capsules 8 used to fix the upper bracket 5 to the vehicle body 2. The capsules 8 are disposed on the opposite ends of the attachment stay 21 in the right-left direction Y such that the steering shaft 3 is interposed between the capsules 8. The capsules 8 are attached to the attachment stay 21 from the rear side in the longitudinal direction of the vehicle body 2. It is to be noted that the capsules 8 are indicated without being cross-sectioned in FIG. 2. As illustrated in FIG. 3, each capsule 8 is formed of, for example, two plate members 8A arranged in the up-down direction Z, and is formed by connecting one ends of the plate members 8A into a generally U-shape that opens toward the front of the vehicle body 2. The two plate members 8A of each capsule 8 hold the attachment stay 21 from above and below, thereby holding the entirety of the upper bracket 5.

At portions of the attachment stay 21, to which the capsules 8 are attached, cutout grooves (not illustrated) are formed so as to extend from the rear of the attachment stay 21 in the longitudinal direction of the vehicle body 2. A resin pin 53 is passed through a peripheral edge portion of each cutout groove in the attachment stay 21. The resin pin 53 passes through the two plate members 8A of the capsule 8 and the attachment stay 21. With the resin pins 53 and the cutout grooves, the capsules 8 are positioned relative to the attachment stay 21 and the upper bracket 5. In this state, each capsule 8 is fixed, with a bolt 42, to the vehicle body 2 and the bolt 42, passed through the two plate members 8A of the capsule 8 from below, and passed through the cutout groove. Thus, the upper bracket 5 is positioned relative to the vehicle body 2 by the capsules 8, and breaking the resin pins 53 allows the upper bracket 5 to be moved toward the front of the vehicle body while leaving the capsules 8 on the vehicle body 2. In this state, each capsule 8 serves as a fixing portion 45 of which the position relative to the vehicle body 2 is fixed.

The lower plate member 8A of each capsule 8 is provided with an absorbing member 9 having a generally L-shape, as viewed from the right-left direction Y. Specifically, the absorbing member 9 has an L-shape that is tilted forward about 90 degrees. A pair of the absorbing member 9 is provided, and the absorbing members 9 are disposed on the opposite sides of the steering shaft 3 in the right-left direction Y such that the steering shaft 3 is interposed between the absorbing members 9 (see FIG. 2). Each absorbing member 9 has a fixed portion 46, an engaged portion 47, a connecting portion 48, and an idle-moving portion 49.

The fixed portion 46 is located at a rear end portion 9A of each of the absorbing members 9. The rear end portion 9A is an upper end portion of the absorbing member 9. The fixed portion 46 is fixed to, for example, a portion of each capsule 8 that serves as the fixing portion 45, the portion closer to the rear of the vehicle body than the bolt 42 is. The engaged portion 47 is located at a front end portion 9B of each of the absorbing members 9. The engaged portion 47 is in the form of a plate that is thin in the axial direction X and extends in both the right-left direction Y and the up-down direction Z. The engaged portion 47 is located closer to the front of the vehicle body than each first side plate 22 is. In this state, the engaged portion 47 faces the corresponding first side plate 22. Each first side plate 22 has an insertion through-hole 51 having a rectangular shape when viewed from the axial direction X. The insertion through-hole 51 is overlapped with the engaged portion 47 as viewed from the axial direction X, and is smaller than the engaged portion 47 as viewed from the axial direction X (see FIG. 2).

The connecting portion 48 is a portion that connects the rear end portion 9A of the absorbing member 9 (the fixed portion 46) and the front end portion 9B of the absorbing member 9 (the engaged portion 47) to each other, and has a generally L-shape as viewed from the right-left direction Y. The connecting portion 48 has a first connection portion 48A and a second connection portion 48B. The first connection portion 48A extends from the fixed portion 46 downward in the height direction of the vehicle body. The second connection portion 48B extends from a lower end portion of the first connection portion 48A toward the front of the vehicle body along the axial direction X, up to the engaged portion 47. The connecting portion 48 is passed, at the second connection portion 48B, through the insertion through-hole 51. The second connection portion 48B is smaller than the insertion through-hole 51 in the right-left direction Y and the up-down direction Z.

The idle-moving portion 49 is included in the connecting portion 48. The idle-moving portion 49 is a part of the connecting portion 48, which is located between the engaged portion 47 and the first side plate 22. Due to the presence of the idle-moving portion 49, the engaged portion 47 is located apart, toward the front of the vehicle body, from the first side plate 22 by a prescribed idle-moving distance D. The idle-moving distances D for the right and left absorbing members 9 are equal to each other. In this way, each absorbing member 9 constitutes a cantilever structure 50 in which one end (the rear end portion 9A) of the absorbing member 9 is fixed to the capsule 8.

Next, description will be provided on an operation of the steering system 1 at the time of a so-called secondary collision. At the time of a secondary collision, when the steering system 1 receives an impact transmitted from the steering member 10, the upper bracket 5 that includes the attachment stay 21 is moved, together with the steering member 10, toward the downstream side in a prescribed moving direction A. The downstream side in the moving direction A coincides with the front side of the vehicle body 2. The upstream side in the moving direction A coincides with the rear side of the vehicle body 2.

Movement of the upper bracket 5 due to a secondary collision will be described in detail. When the steering system 1 receives an impact of which the magnitude is equal to or greater than a prescribed value, the resin pins 53 that pass through the attachment stay 21 and the capsules 8 are broken. Then, as the attachment stay 21 slides forward relative to the two plate members 8A of each capsule 8, the upper bracket 5 is moved toward the downstream side and is detached from the capsules 8. A load (impact load due to a secondary collision) that is absorbed by the breakage of the resin pins 53 and the friction between the capsules 8 and the attachment stay 21 will be referred to as "detachment load".

In accordance with the movement of the upper bracket 5, the upper column 13 moves toward the downstream side. In other words, the steering column 4 and the steering shaft 3 move forward. At this time, the position of each capsule 8, which is attached to the vehicle body 2 with the bolt 42, relative to the vehicle body 2 remains unchanged. Thus, the capsules 8 position the upper bracket 5 relative to the vehicle body 2 before occurrence of a secondary collision, whereas the capsules 8 allow the upper bracket 5 to be moved toward the downstream side in the moving direction A upon occurrence of the secondary collision. In addition, the position of each capsule 8 relative to the vehicle body 2 after the secondary collision is the same as that before the secondary collision.

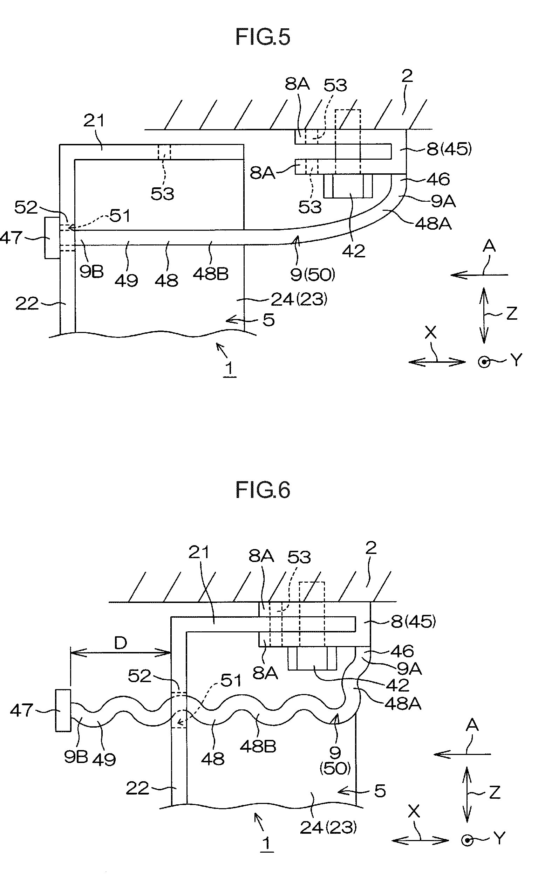

FIG. 4 illustrates the state at the moment when an engaging portion 52 and the engaged portion 47, which are illustrated in FIG. 3, are engaged with each other due to a secondary collision. FIG. 5 illustrates the state achieved after the connecting portion 48 that is illustrated in FIG. 3 is deformed by the secondary collision. The posture of each member illustrated in FIG. 4 and FIG. 5 coincides with that in FIG. 1 Hereinafter, description will be provided with reference to FIG. 4 and FIG. 5 in addition to FIG. 1 to FIG. 3. As illustrated in FIG.4, when the upper bracket 5 is moved, due to the secondary collision, toward the downstream side in the prescribed moving direction A, each first side plate 22 is moved toward the downstream side to approach the engaged portion 47 of the absorbing member 9. Thus, the idle-moving distance D before the secondary collision becomes shorter, and finally each engaged portion 47 engages with (contacts) the peripheral edge around the insertion through-hole 51 in the first side plate 22. The timing at which the engaged portion 47 of the right absorbing member 9 engages with the peripheral edge is the same as the timing at which the engaged portion 47 of the left absorbing member 9 engages with the peripheral edge. A portion of the first side plate 22, with which the engaged portion 47 is engaged, will be referred to as the engaging portion 52. The engaged portion 47 is opposed to the engaging portion 52 from the downstream side in the moving direction A before and after a secondary collision (see also FIG. 3).

In the state before a secondary collision illustrated in FIG. 3, due to the presence of the idle-moving portion 49, the engaged portion 47 is located apart from the engaging portion 52 by the prescribed idle-moving distance D toward the downstream side in the moving direction A. Because the first side plate 22 is formed integrally with the attachment stay 21 and the attachment stay 21 is a part of the upper bracket 5, the engaging portion 52 of the first side plate 22 is movable together with the upper bracket 5. Thus, the engaging portion 52 is engaged with the engaged portion 47 after being moved (idle movement) over the idle-moving distance D toward the downstream side in the moving direction A from the state before the secondary collision. At this time, the attachment stay 21 has already been detached from each capsule 8, that is moved from a position between the two plate members 8A toward the downstream side in the moving direction A.

As illustrated in FIG. 5, after the engagement of the engaged portion 47 with the engaging portion 52, the upper bracket 5 having the engaging portions 52 attempts to be further moved, by the impact load, together with the engaged portions 47 toward the downstream side in the moving direction A. At this time, the engaged portion 47 of each absorbing member 9 is moved in such a direction as to move away from the fixed portion 46, and thus the connecting portion 48 deforms so as to be pulled toward the downstream side. More specifically, the connecting portion 48 deforms such that the bent connection portion between the first connection portion 48A and the second connection portion 48B is stretched. Due to the deformation, the upper bracket 5 is further moved toward the downstream side, and thus the steering column 4 and the steering shaft 3 are further moved toward the downstream side.

A load that is absorbed by the deformation of each connecting portion 48 and the contraction of the steering column 4 and the steering shaft 3 will be referred to as "EA load". In this way, in each absorbing member 9, the connecting portion 48 deforms after the engaged portion 47 is engaged with the engaging portion 52. The energy of the secondary collision is absorbed specifically by the deformation of the connection portion between the first connection portion 48A and the second connection portion 48B.

The absorbing member 9 is fixed to the fixing portion 45 included in the steering system 1, that is, fixed to the capsule 8. The upper bracket 5 having the engaging portion 52 is a part of the steering system 1. Thus, the idle-moving distance D, which is the distance between the engaged portion 47 of the absorbing member 9 and the engaging portion 52 before a secondary collision, is determined only by the components of the steering system 1. Thus, variations of the position at which the steering system 1 is assembled to the vehicle body 2 do not cause variations of the idle-moving distance D.

By adjusting the idle-moving distance D, it is possible to adjust a time lag between the timing at which the detachment load is generated and the timing at which the EA load is generated, thereby adjusting the amount of secondary collision energy that is to be absorbed by the absorbing members 9. That is, it is possible to set the amount of secondary collision energy that is to be absorbed by the absorbing members 9, to a desired value by adjusting the idle-moving distance D. In the present embodiment, a pair of the absorbing members 9 is provided such that the steering shaft 3 is interposed between the absorbing members 9. Thus, it possible to stably absorb the secondary collision energy.

Next, another embodiment of the invention will be described. FIG. 6 is a view of the other embodiment of the invention, which is applied to FIG. 3. The position of each member in FIG. 6 coincides with that in FIG. 1. In FIG. 6, the same components as those in the above-described embodiment are denoted by the same reference symbols as those in the above-described embodiment, and description thereof will be omitted. Hereinafter, description will be provided with reference to FIG. 6 in addition to FIG. 1 to FIG. 5.

As illustrated in FIG. 6, the connecting portion 48 of each absorbing member 9 in the other embodiment of the invention is in a wave-shape. Although connecting portion 48 has an L-shape as a whole, the first connection portion 48A is curved so as to bulge toward the front and rear of the vehicle body 2 alternately (so as to curve in a zigzag pattern) while extending from the fixed portion 46 toward the lower end portion of the first connection portion 48A. The second connection portion 48B is curved so as to bulge toward the upper side and the lower side alternately (so as to curve in a zigzag pattern) while extending from the lower end portion of the first connection portion 48A to the engaged portion 47. With this structure, in the normal state before a secondary collision, the size of the connecting portion 48 is small, whereas at the time of a secondary collision, the connecting portion 48 is deformed by a large amount. Thus, the absorbing member 9 is capable of absorbing the secondary collision energy effectively.

In addition, in the present embodiment, the first connection portion 48A and the second connection portion 48B need not be different from each other in the direction in which the wave-shape of the absorbing member 9 is curved, that is, the absorbing member 9 need not be in an L-shape. That is, the absorbing member 9 may have a generally linear shape as a whole as long as the connecting portion 48 has a wave-shape from the fixed portion 46 to the engaged portion 47.

The invention is not limited to the embodiments described above, and various modifications may be made within the scope of the appended the claims. For example, each engaged portion 47 need not be in the form of a plate that extends in the right-left direction Y and the up-down direction Z as long as the engaged portion 47 is in such a shape as to be engaged with the engaging portion 52. For example, each engaged portion 47 may be in the form of a T-shaped rod member that extends in one of the right-left direction Y and the up-down direction Z. Alternatively, each engaged portion 47 may be formed by bending the front end portion 9B into an L-shape. Further alternatively, each engaged portion 47 may be a member prepared separately from the connecting portion 48. For example, each engaged portion 47 may be formed by welding a spherical metal member or the like to the front end portion 9B of the absorbing member 9. Further alternatively, each engaged portion 47 prepared separately from the connecting portion 48 may be attached to the front end portion 9B by swaging, nut, or the like.

The engaging portion 52 need not be formed at the peripheral edge around the insertion through-hole 51, and the engaging portion 52 may be formed at another portion of the first side plate 22. The engaging portion 52 need not be formed in the first side plate 22 as long as the engaging portion 52 is formed in a member that is moved together with the steering column 4 at the time of a secondary collision. In this case, the engaging portion 52 is formed in a part of the upper bracket 5, as the peripheral edge around an insertion through-hole, a groove, a locking structure, or the like.

A single absorbing member 9 may be provided in the steering system 1. Thus, it is possible to reduce the number of components. In this case as well, a portion in which the engaging portion 52 is formed is not limited to the peripheral edge around the insertion through-hole 51. In this case, it is preferable that the engaging portion 52 be formed at a position near the steering column 4 to uniformly disperse the EA load in the upper bracket 5 .

The fixing portion 45 is not limited to the capsule 8 as long as the fixing portion 45 is manufactured as a part of the steering system 1 and provided at a portion fixed to the vehicle body 2 before and after a secondary collision. The shape of the absorbing member 9 is not particularly limited as long as the absorbing member 9 is in such a shape that the absorbing member 9 is deformable in response to the movement of the engaged portion 47 at the time of a secondary collision. For example, the idle-moving portion 49 may be curved toward the lower side, so that the absorbing member 9 absorbs secondary collision energy by being squeezed by the peripheral edge around the insertion through-hole 51 at the time of a secondary collision.

The wave-shaped portion may be formed in a part of the connecting portion 48. In the above-described embodiments, the first side plates 22 are integrated with the attachment stay 21 and the upper fixing bracket 20. Alternatively, the first side plates 22 may be integrated with one of the attachment stay 21 and the upper fixing bracket 20. The application of each absorbing member 9 is not limited to the steering system 1 on which both the tilt adjustment and the telescopic adjustment can be made, but each absorbing member 9 may be applied to all steering systems such as a steering system on which only one of the tilt adjustment and the telescopic adjustment can be made.

The steering system 1 may be applied to an electric power steering system that assists a steering operation with the use of an electric motor, and may be applied to a manual steering system in which steering assist using an electric motor is not performed. In the above-described embodiments, the attachment stay 21 has already been detached from the capsules 8 when the engaging portions 52 are engaged with the engaged portions 47. However, it is possible to employ a configuration in which the attachment stay 21 has not been detached from the capsules 8 when the engaging portions 52 are engaged with the engaged portions 47.

## Claims

1. A steering system (1) comprising:
a bracket (5) that holds a steering shaft (3) to which a steering member (10) is connected, and that is movable toward a downstream side in a prescribed moving direction (A) together with the steering member (10) at the time of a secondary collision;
an engaging portion (52) formed so as to be movable together with the bracket (5);
a fixing portion (45) of which a position relative to a vehicle body (2) is fixed, the position of the fixing portion (45) relative to the vehicle body (2) after the secondary collision being the same as that before the secondary collision; and
an absorbing member (9) with a cantilever structure, the absorbing member (9) having a fixed portion (46) fixed to the fixing portion (45), an engaged portion (47) located on the downstream side in the moving direction (A) with respect to the engaging portion (52), a connecting portion (48) that connects the fixed portion (46) and the engaged portion (47) to each other, **characterized in that**
the absorbing member (9) comprises an idle-moving portion (49) formed in the connecting portion (48); wherein
at the time of the secondary collision, the absorbing member (9) absorbs energy of the secondary collision by deforming the connecting portion (48) after engagement between the engaging portion (52) and the engaged portion (47), and
the idle-moving portion (49) is a part of the connecting portion (48) located between the engaged portion (47) and the engaging portion (52) before the secondary collision, the idle-moving portion (49) having a prescribed length, the length of the idle-moving portion (49) being equal to an idle-moving distance (D) over which the engaging portion (52) moves until the engaging portion (52) is engaged with the engaged portion (47) at the time of the secondary collision.

2. The steering system (1) according to claim 1, wherein the fixing portion (45) includes a capsule (8) that positions the bracket (5) with respect to the vehicle body (2) before the secondary collision, and that allows the bracket (5) to move toward the downstream side in the moving direction (A) at the time of the secondary collision.

3. The steering system (1) according to claim 1 or 2, wherein the number of the absorbing member (9) is one.

4. The steering system (1) according to claim 1 or 2, wherein a pair of the absorbing members (9) is provided so that the steering shaft (3) is interposed between the absorbing members (9).

5. The steering system (1) according to any one of claims 1 to 4, wherein the connecting portion (48) has a wave-shape.

## Patentansprüche

1. Lenksystem (1), mit:
einer Halterung (5), die eine Lenkwelle (3) hält, an der ein Lenkteil (10) angebracht ist, und die in Richtung zu einer nachgelagerten Seite in einer vorgeschriebenen Bewegungsrichtung (A) zusammen mit dem Lenkteil (10) zum Zeitpunkt einer sekundären Kollision beweglich ist;
einem Eingriffsabschnitt (52), welcher derart ausgebildet ist, dass er zusammen mit der Halterung (5) beweglich ist;
einem Befestigungsabschnitt (45), von dem eine Position relativ zu einer Fahrzeugkarosserie (2) fixiert ist, wobei die Position des Befestigungsabschnitts (45) relativ zu der Fahrzeugkarosserie (2) nach der sekundären Kollision die gleiche ist wie vor der sekundären Kollision; und
einem Absorbierungsteil (9) mit einer Kragarmstruktur, wobei das Absorbierungsteil (9) einen befestigten Abschnitt (46), welcher an dem Befestigungsabschnitt (45) befestigt ist, einen eingegriffenen Abschnitt (47), welcher auf der nachgelagerten Seite in der Bewegungsrichtung (A) mit Bezug zu dem Eingriffsabschnitt (52) platziert ist, und einen Verbindungsabschnitt (48) aufweist, der den befestigten Abschnitt (46) und den eingegriffenen Abschnitt (47) miteinander verbindet, **dadurch gekennzeichnet, dass**
das Absorbierungsteil (9) einen Leerlaufbewegungsabschnitt (49) umfasst, welcher in dem Verbindungsabschnitt (48) ausgebildet ist; wobei
zum Zeitpunkt der sekundären Kollision das Absorbierungsteil (9) Energie der sekundären Kollision durch Verformen des Verbindungsabschnitts (48) nach dem Eingreifen zwischen dem Eingriffsabschnitt (52) und dem eingegriffenen Abschnitt (47) absorbiert, und
der Leerlaufbewegungsabschnitt (49) ein Teil des Verbindungsabschnitts (48) ist, welcher vor der sekundären Kollision zwischen dem eingegriffenen Abschnitt (47) und dem Eingriffsabschnitt (52) platziert ist, wobei der Leerlaufbewegungsabschnitt (49) eine vorbestimmte Länge aufweist, die gleich einer Leerlaufbewegungsdistanz (D) ist, über die sich der Eingriffsabschnitt (52) bewegt, bis der Eingriffsabschnitt (52) mit dem eingegriffenen Abschnitt (47) zum Zeitpunkt der sekundären Kollision in Eingriff gelangt.

2. Lenksystem (1) gemäß Anspruch 1, wobei der Befestigungsabschnitt (45) eine Hülse (8) beinhaltet, die die Halterung (5) mit Bezug zu der Fahrzeugkarosserie (2) vor der sekundären Kollision positioniert, und die es der Halterung (5) ermöglicht, sich zum Zeitpunkt der sekundären Kollision in Richtung zur nachgelagerten Seite in der Bewegungsrichtung (A) zu bewegen.

3. Lenksystem (1) gemäß Anspruch 1 oder 2, wobei die Anzahl des Absorbierungsteils (9) eins ist.

4. Lenksystem (1) gemäß Anspruch 1 oder 2, wobei ein paar Absorbierungsteile (9) derart vorgesehen sind, dass die Lenkwelle (3) zwischen den Absorbierungsteilen (9) eingefügt ist.

5. Lenksystem (1) gemäß einem der Ansprüche 1 bis 4, wobei der Verbindungsabschnitt (48) eine Wellenform aufweist.

## Revendications

1. Système de direction (1) comprenant :
un support (5) soutenant un arbre de direction (3) auquel est relié un élément de direction (10) et pouvant se déplacer vers un côté aval dans une direction de déplacement prescrite (A) conjointement avec l'élément de direction (10), au moment d'une collision secondaire ;
une partie de mise en prise (52) formée de manière à pouvoir se déplacer conjointement avec le support (5) ;
une partie de fixation (45) dont une position par rapport à une carrosserie de véhicule (2) est fixe, la position de la partie de fixation (45) par rapport à la carrosserie de véhicule (2) après la collision secondaire étant la même qu'avant la collision secondaire ; et
un élément amortisseur (9) possédant une structure en porte-à-faux, l'élément amortisseur (9) comportant une partie fixe (46) fixée à la partie de fixation (45), une partie en prise (47) située du côté aval dans la direction de déplacement (A) par rapport à la partie de mise en prise (52), une partie de liaison (48) qui relie la partie fixe (46) et la partie en prise (47) entre elles, **caractérisé en ce que**
l'élément amortisseur (9) comprend une partie de déplacement au ralenti (49) formée dans la partie de liaison (48) ; dans lequel
au moment de la collision secondaire, l'élément amortisseur (9) absorbe de l'énergie de la collision secondaire en déformant la partie de liaison (48) après l'entrée en prise de la partie de mise en prise (52) et de la partie en prise (47), et
la partie de déplacement au ralenti (49) fait partie de la partie de liaison (48) située entre la partie en prise (47) et la partie de mise en prise (52), avant la collision secondaire, la partie de déplacement au ralenti (49) étant d'une longueur prescrite, la longueur de la partie de déplacement au ralenti (49) étant égale à une distance de déplacement au ralenti (D) sur laquelle la partie de mise en prise (52) se déplace jusqu'à ce que la partie de mise en prise (52) entre en prise avec la partie en prise (47) au moment de la collision secondaire.

2. Système de direction (1) selon la revendication 1, dans lequel la partie de fixation (45) comprend une capsule (8) qui positionne le support (5) par rapport à la carrosserie de véhicule (2) avant la collision secondaire, et qui permet au support (5) de se déplacer vers le côté aval dans la direction de déplacement (A) au moment de la collision secondaire.

3. Système de direction (1) selon la revendication 1 ou 2, dans lequel le nombre d'éléments amortisseurs (9) est d'un.

4. Système de direction (1) selon la revendication 1 ou 2, dans lequel il est fait usage d'une paire d'éléments amortisseurs (9), de sorte que l'arbre de direction (3) est intercalé entre les éléments amortisseurs (9).

5. Système de direction (1) selon l'une quelconque des revendications 1 à 4, dans lequel la partie de liaison (48) est de forme ondulée.
